# EUROPEAN PATENT SPECIFICATION

(11) **EP 3 854 699 B1**
(45) Date of publication and mention of the grant of the patent: **18.06.2025**
(21) Application number: 21152414.5
(22) Date of filing: 19.01.2021
(51) Int. Cl.: B64G 1/64

(54) **SMALLSAT PAYLOAD CONFIGURATION**
NUTZLASTKONFIGURATION EINES KLEINSATELLITEN
CONFIGURATION DE LA CHARGE UTILE DE SMALLSAT

(30) Priority: 21.01.2020 US 202016748617
(43) Date of publication of application: 28.07.2021
(73) Proprietor: Space Systems/Loral, LLC, Palo Alto, California 94303 (US)
(72) Inventor: TURNER, Andrew E, California, 94040 (US)
(74) Representative: Beck Greener LLP

(56) References cited:
- JP-A- 2011 251 560
- RU-C1- 2 111 901
- US-A- 4 688 486
- US-A- 5 199 672
- US-A1- 2016 304 222
- US-A1- 2018 170 586

## Description

### TECHNICAL FIELD

This invention relates generally to a launch vehicle payload where the payload includes a large number of very small spacecraft, and more particularly to techniques for structurally supporting the spacecraft during launch and deploying the spacecraft following launch.

### BACKGROUND

Conventionally, smallsats such as microsats (10-100 kg mass), nanosats (1-10 kg mass) and picosats (0.1-1 kg mass) are launched only in small quantities on shared launches with larger spacecraft or on relatively small launch vehicles. Satellite operators, however, are now contemplating large constellations of nanosats or picosats, for example, the constellations including as many as thousands or even tens of thousands of spacecraft. The presently disclosed techniques enable tens to thousands of smallsats to be simultaneously carried into space on a single launch vehicle, and subsequently deployed into orbit. US5199672A discloses a prior art system comprising a plurality of spacecraft coupled via spring elements to a tree-like arrangement.

### SUMMARY

The presently disclosed techniques relate to a launch vehicle payload system that includes a number of small spacecraft and to techniques for structurally supporting the spacecraft during launch and deploying the spacecraft following launch.

A system and a method according to the appended claims are provided.

In non-claimed examples, the system may include at least one robotic manipulator. In some examples, the at least one robotic manipulator may be configured to detach at least one of the plurality of spacecraft from the structural arrangement, and deploy the spacecraft by imparting a delta V to the spacecraft. In some examples, the system may include a sensor and the at least one robotic manipulator may be configured to position the at least one spacecraft proximate to the sensor such that a physical inspection may be performed using the sensor. In some examples, the system may include a debris management arrangement and the robotic manipulator may be configured to detach one or more of the mechanical linkages and secure the detached mechanical linkages to the debris management arrangement.

### BRIEF DESCRIPTION OF THE DRAWINGS

Features of the invention are more fully disclosed in the following detailed description of the preferred embodiments, reference being had to the accompanying drawings, in which like reference numerals designate like structural element, and in which:
Figure 1 illustrates a system including a plurality of small spacecraft and a structural arrangement, according to an implementation.
Figure 2 illustrates a system including a plurality of small spacecraft, a structural arrangement and a robotic manipulator, according to an implementation.
Figure 3 illustrates an example of a robotic manipulator, according to an implementation.
Figure 4 illustrates a conceptual view of a system that includes a robotic manipulator configured for use in a deployment process.
Figure 5 illustrates a system including a plurality of small spacecraft and a structural arrangement, according to another implementation.
Figure 6 illustrates a process flow diagram for deploying a spacecraft from an orbiting system.
Figure 7 illustrates a process flow diagram for deploying a plurality of spacecraft from an orbiting system.
Figure 8 illustrates a system including a plurality of small spacecraft and a structural arrangement, according to another implementation.
Figure 9 illustrates techniques for deploying the plurality of small spacecraft from the structural arrangement, according to another implementation.
Figure 10 illustrates some design considerations for spring constant selection for mechanical linkages coupling the spacecraft to branch members, in accordance with some implementations.
Figure 11A and 11B illustrate techniques for deploying the plurality of small spacecraft from the structural arrangement, according to another implementation.

### DETAILED DESCRIPTION

Specific exemplary embodiments of the invention will now be described with reference to the accompanying drawings. This invention may, however, be embodied in many different forms, and should not be construed as limited to the embodiments set forth herein. Rather, these embodiments are provided so that this disclosure will be thorough and complete, and will fully convey the scope of the invention to those skilled in the art.

It will be understood that when an element is referred to as being "connected" or "coupled" to another element, it can be directly connected or coupled to the other element, or intervening elements may be present. It will be understood that although the terms "first" and "second" are used herein to describe various elements, these elements should not be limited by these terms. These terms are used only to distinguish one element from another element. As used herein, the term "and/or" includes any and all combinations of one or more of the associated listed items. The symbol "/" is also used as a shorthand notation for "and/or".

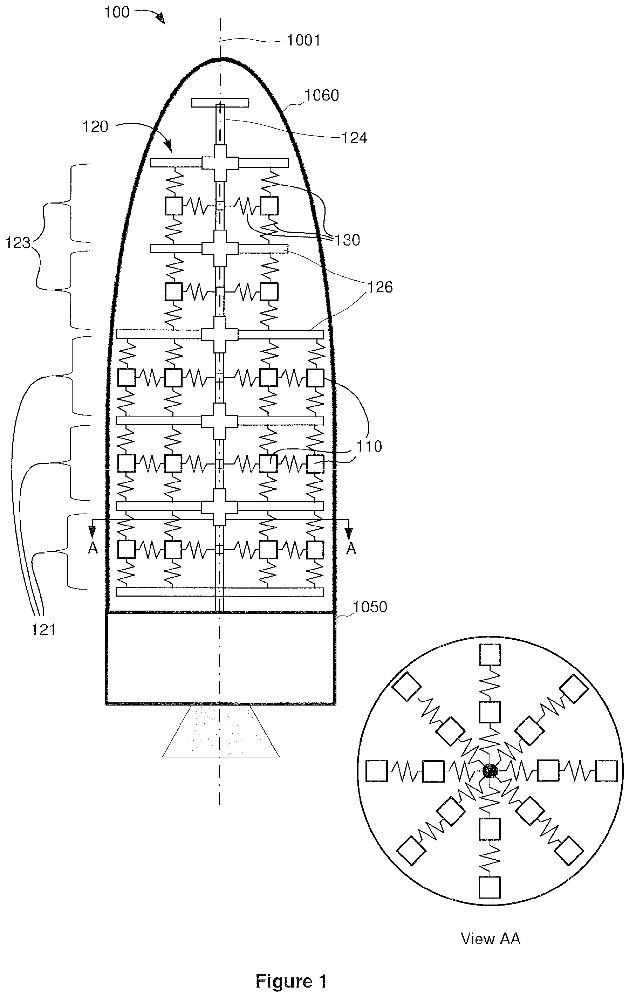

A single large launch vehicle may have a payload capability of several tons. The present disclosure relates to taking advantage of such payload capability to simultaneously launch a large number of smallsats. Referring now to Figure 1, a system 100 includes a plurality of small spacecraft 110 and a structural arrangement 120. The structural arrangement 120 is, advantageously, configured to provide the only load path between the plurality of spacecraft 110 and a launch vehicle upper stage 1050. The structural arrangement 120 is configured as a lightweight tree-like structure that includes at least one member 124 approximately aligned with the launch vehicle longitudinal axis 1001 (that may be referred to herein as a "trunk member") and a plurality of "branch" members 126. Each branch member 126 has an end portion that is substantially outboard from the longitudinal axis 1001. In the illustrated implementation, each branch member 126 is approximately orthogonal to the trunk member 124, but other arrangements are contemplated wherein the branch member 126 may be disposed at an acute angle to the longitudinal axis 1001.

The system 100 includes a number of mechanical linkages 130. The structural arrangement 120 may be configured to include interfaces with which the mechanical linkages 130 may be coupled. Each mechanical linkage 130 is a spring-like coupling that provides substantial resistance to both compression and tension. In the illustrated implementation, each mechanical linkage 130 is detachably coupled at a first end with a first respective spacecraft 110 and is detachably coupled at a second end with either of: one of the plurality of branch members 126, the at least one trunk member 124, or a second respective spacecraft 110.

In an implementation, the structural arrangement 120 conforms to the cylindrical/conical inner surface a launch vehicle fairing 1060 so as to efficiently utilize the interior volume of the launch vehicle fairing. The mechanical linkages 130 between the spacecraft 110 may be structurally modeled as mechanical springs configured to resist both compressive and tensile forces. A spring constant of the mechanical linkages 130 may be selected such that the system (structural arrangement 120, mechanical linkages 130 and spacecraft 110) exhibits a requisite degree of stiffness. In addition to supporting the small spacecraft 110, the mechanical linkages 130 may also prevent physical contact between individual spacecraft 110 in the face of launch vibration and acoustic loads, thus preventing damage to the spacecraft 110.

In the configuration illustrated in Figure 1, 64 small spacecraft 110 are contemplated (16 spacecraft 110 disposed in each of three lower tiers 121, and 8 spacecraft 110 disposed in each of two upper tiers 123). The illustrated 3D lattice-like arrangement of spacecraft may be considerably more extensive than illustrated. As a result, a much greater number of very small spacecraft, for example one thousand or more nanosats, may be accommodated by the illustrated techniques.

Advantageously, mechanical couplings between the supporting structure 120 and the launch vehicle fairing 1060 are avoided, in order to simplify separation of the launch vehicle fairing 1060 during or after ascent to orbit. Instead, the spacecraft 110 are mechanically coupled, by way of the branch members 126 and the trunk member 124 to the launch vehicle upper stage 1050. In the illustrated implementation, the trunk member 124 extends vertically along the launch vehicle longitudinal axis 1001. The trunk member 124 may be the primary load-path between the lattice arrangement and the launch vehicle upper stage 1050. The system 100 may be assembled prior to launch from its individual components. For example, a desired number of branch members 126 may first be attached to the trunk member 124, forming a tree-like structural arrangement 120. Subsequently, the small spacecraft 110 may then be attached to the structural arrangement 120, using the mechanical linkages 130. Each small spacecraft 110 may be supported, by way of detachable couplings with the mechanical linkages 130 to form the illustrated three-dimensional lattice-like structure.

In addition to those mechanical linkages 130 that couple a spacecraft 110 with the trunk member 124 or with a branch member 126, some mechanical linkages 130 may couple one spacecraft 110 with a neighboring spacecraft 110, as may be better observed in View A-A.

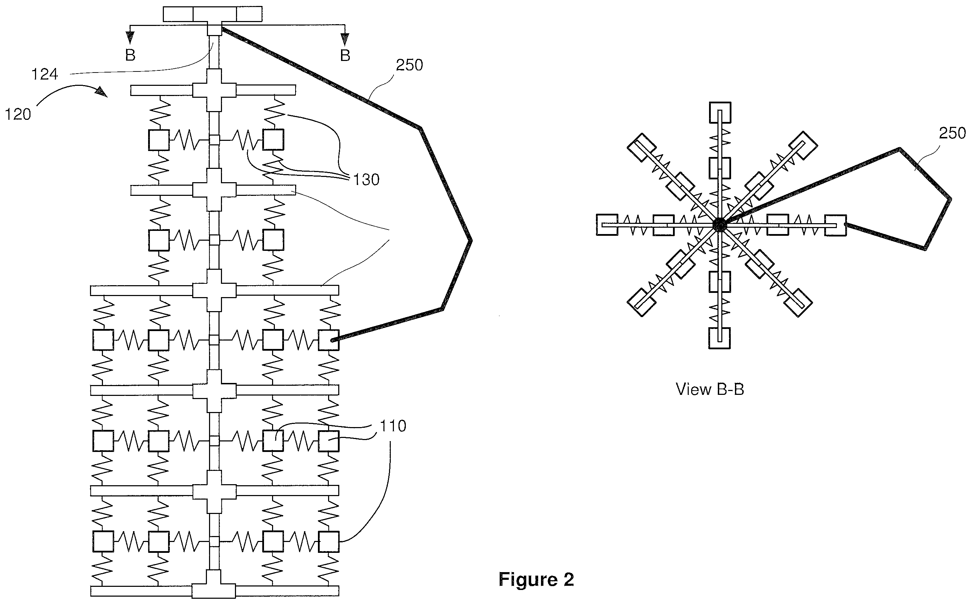

The spacecraft 110 may be detached from the structural arrangement 120 following ascent to orbit. In an embodiment, illustrated in Figure 2, the system 100 includes one or more robotic arms 250 configured to detach the spacecraft 110 from the structural arrangement 120. In other implementations, a robotic arm mounted on a free-flying spacecraft (not illustrated) that may be carried to orbit by the same launch vehicle as the many small spacecraft. This servicing craft could also be carried to orbit by a separate launch vehicle. In such a case, the servicing craft may be configured to perform orbital rendezvous and then dock with the launch vehicle carrying the small spacecraft.

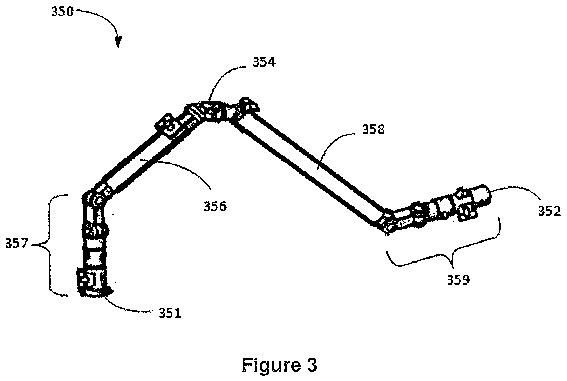

In some implementations, the robotic manipulator 250 may include a robotic arm having two end effectors and a number of articulable joints disposed therebetween. For example, referring now to Figure 3, an example of a robotic manipulator will be described. Manipulator 350 includes first and second longitudinally elongated arms 356 and 358. Respective proximal ends of the arms 356 and 358 may be coupled together by means of an elbow joint 354. Articulator 357 including one or more articulable joints may be coupled with a distal end of arm 356. Similarly, articulator 359 may be coupled with a distal end of arm 358. In some implementations one or both of the articulator 357 and the articulator 359 includes a pitch joint, a yaw joint, and a roll joint. First and second end effectors 351 and 352 may be mounted at the respective distal ends of the articulators 357 and 359.

The mass of the robotic manipulator(s) 250 used to disassemble the lattice may be expected to be a small fraction of the aggregate total mass of the multiple spacecraft 110. The robotic manipulator 250 may be configured to detach mechanical linkages 130. The robotic manipulator 250 may move each small spacecraft 110, one by one, for example, a safe distance from the remaining spacecraft and provide the spacecraft 110 with a modest delta-V to assure positive separation. The robotic manipulator 250 may also be used to facilitate inspection of any or all of the small spacecraft 110 prior to separation. For example, the robotic manipulator 250 may be configured to position a selected small spacecraft 110 in view of a camera or various other sensors. The robotic manipulator 250 may be used to secure the detached mechanical linkages to or within a debris management arrangement such as a storage bin or bins (not illustrated) to avoid creation of orbital debris.

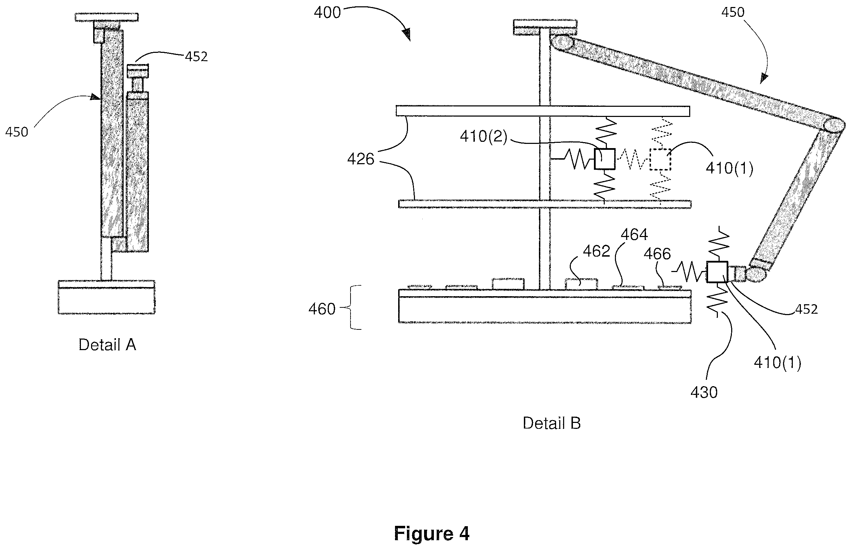

Figure 4 illustrates a conceptual view of a system 400 that includes a robotic manipulator 450 configured for use in a deployment process. In Detail A, the robotic manipulator 450 is illustrated as being in a stowed configuration; in Detail B, the robotic manipulator 450 is illustrated as being in a deployed configuration. In the illustrated implementation, a single robotic manipulator 450 is illustrated, but it will be appreciated that two or more robotic manipulators 450 may be contemplated in order to provide a desired degree of redundancy.

In some implementations, one or all of the robotic manipulators 450 may have a range of motion which covers the entire interior of the launch vehicle fairing. Whether or not the robotic manipulator 450 has such a range of motion, the robotic manipulator 450 may be configured as a self-relocatable manipulator, such as described, for example, in U.S. Pat. No. 4,585,388.

In some implementations, the robotic manipulator 450 may include a first end effector 452, configured to facilitate the detachment, inspection and deployment of each individual spacecraft. For example, the first end effector 452 may be configured to interface with a small spacecraft 410 and/or a mechanical linkage 430. In some implementations, the robotic manipulator 450 may sequentially grasp, with the first end effector 452, each small spacecraft 410 one at a time. As illustrated in Detail B, the robotic manipulator 450 may be configured to detach the mechanical linkages 430 coupling a spacecraft 410 (1) from the supporting branches 426 and an adjacent spacecraft 410(2) before grasping the spacecraft 410 and moving it away from a first position (dashed line) to a second position (solid line).

In some implementations the second position may be a location from which the spacecraft 410(1) is to be separated (deployed) from the system 400. In the illustrated implementation, however, the system 400 is configured to perform one or more of the following additional processes before the spacecraft 110(1) is deployed. More particularly, the system 400 includes a module 460 for inspection, testing and/or servicing of the spacecraft 110. In the illustrated implementation the module 460 includes a debris management arrangement 462, a second end effector 464, and an inspection station 466. The second position, accordingly, may be proximate to the inspection station 466 which may include a sensor (e.g., a camera or other imager) for physical inspection of the spacecraft 410(1). The second position may also be proximate to the second end effector 464. Subsequent and/or prior to physical inspection of the spacecraft 410(1), the robotic manipulator 450 may be configured to place the spacecraft 410(1) so as to engage the second end effector 464. The second end effector 464 may be configured to grasp the spacecraft 410(1), following which the robotic manipulator 450 may disengage from the spacecraft 410(1) and proceed with other tasks while the spacecraft is held in place by the second end effector 464. For example, the robotic manipulator 450 may grasp and detach individual mechanical linkages 430 from the spacecraft 410(1), and secure the detached mechanical linkages 430 to the debris management arrangement 462. In some implementations the debris management arrangement may be a storage bin and securing the detached mechanical linkages 430 to the debris management arrangement 462 may include placing the detached mechanical linkages 130 inside the storage bin. As a result, creation of orbital debris may be avoided. The storage bin 462 may also be used to dispose of spacecraft which have failed the physical inspection procedure. The module 460 may further include interfaces by which checkout and pre-deployment procedures for the spacecraft 410 may be accomplished, including, for example, mechanical or electrical subsystem checkouts.

Upon completion of the foregoing processes, the robotic manipulator 450 may reengage the spacecraft 410 which may then be released from the second end effector 464. The robotic manipulator 450 may then proceed to deploy the spacecraft 410 through a combination of an axial movement and release, similar to a "throwing mechanism". The release may be timed such that the arm will provide the desired delta-V to the spacecraft 410. Upon completion of the deployment task, the robotic manipulator 450 may move on to the next spacecraft in sequence.

In some implementations, the structural arrangement 420 may include propulsion capability and/or remain attached to a launch vehicle upper stage that has propulsion capability. In such implementations, the structural arrangement, following deployment of the smallsats, may be deorbited by the onboard propulsion capability.

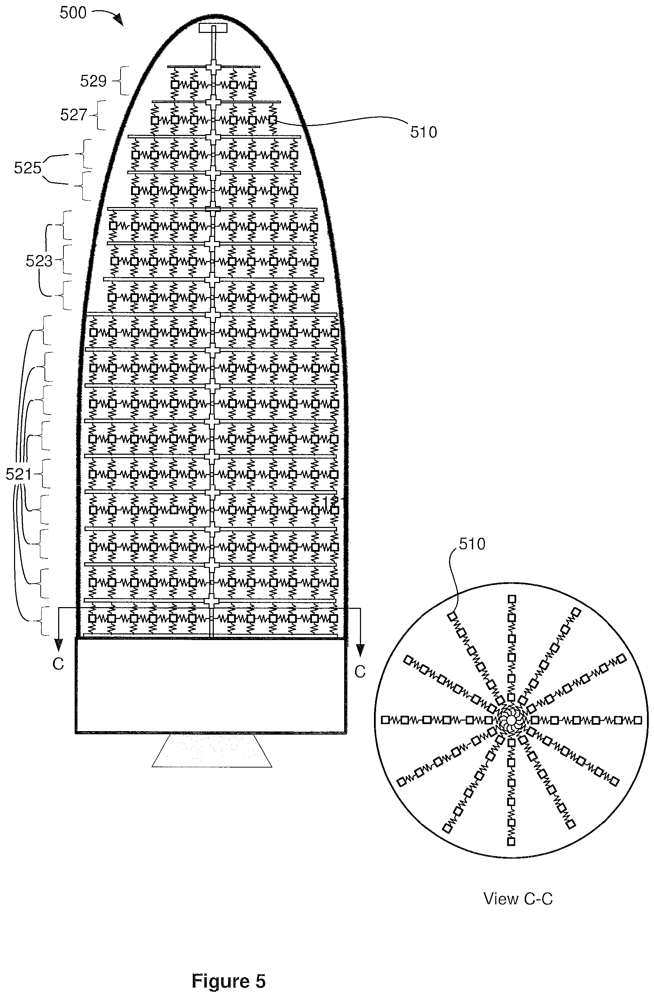

As indicated above in connection with Figure 1, the presently disclosed techniques contemplate a launch vehicle payload that includes a large number of relatively small spacecraft disposed in an arrangement that efficiently uses available launch vehicle fairing volume. Figure 5 illustrates an example implementation that includes 16 tiers, each tier including a number of smallsats 510. More particularly, in the illustrated implementation, nine lower tiers 521 each include 72 smallsats 510, three intermediate tiers 523 each include 60 smallsats 510; two intermediate tiers 525 each include 48 smallsats 510; one intermediate tier 527 includes 36 smallsats 510; and one upper tier 529 includes 24 small sets 510. Thus, in the illustrated implementation, as many as 984 smallsats 510 may be accommodated.

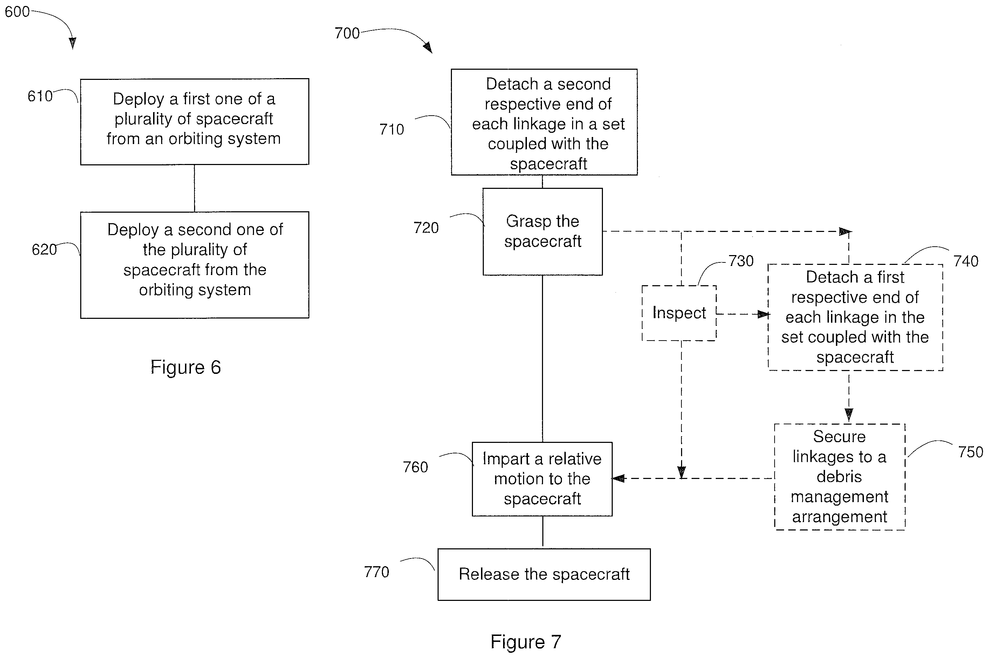

Figure 6 illustrates a process flow diagram for deploying a plurality of spacecraft from an orbiting system. The method 600 may start, at block 610, by deploying a first one of the plurality of spacecraft from the orbiting system. The method may continue, at block 620, by deploying a second one of the plurality of spacecraft. As described hereinabove, the orbiting system includes the plurality of spacecraft and a structural arrangement providing a load path between a launch vehicle upper stage and the plurality of spacecraft. Each spacecraft is mechanically coupled with the launch vehicle upper stage only by the structural arrangement. The structural arrangement includes at least one trunk member that is approximately aligned with the longitudinal axis of the launch vehicle upper stage, a plurality of branch members, each branch member being attached to the trunk member and having at least a first end portion that is substantially outboard from the longitudinal axis, and a plurality of mechanical linkages, each linkage coupled at a first end with a first respective spacecraft and coupled at a second end with one of the plurality of branch members, the trunk member or a second respective spacecraft.

Figure 7 illustrates a process flow diagram for deploying the spacecraft from the orbiting system, according to some implementations. The method 700 may be executed as part of one or both of block 610 and block 620 of the method 600 where the orbiting system includes a robotic manipulator as described above. The method 700 may start, at block 710, with detaching, using the robotic manipulator, each respective second end of the mechanical linkages coupled with the spacecraft. The method 700 may continue, at block 720 with grasping the spacecraft with the robotic manipulator.

As described hereinabove the robotic manipulator may be configured to deploy the spacecraft by imparting a delta V to the spacecraft relative to the orbiting system. Accordingly, the method 700 may continue at block 760 imparting a relative motion to the spacecraft and, at block 770, releasing the spacecraft.

Optionally, in some implementations one or more of additional process block 730, 740 and 750 may be executed prior to block 760. In some limitations, for example, the orbiting system includes a sensor, and block 730 may be executed, so as to perform a physical inspection of the spacecraft using the sensor.

Whether or not optional block 730 is executed, in some implementations the robotic manipulator may optionally be used to detach each respective first end of the mechanical linkages coupled with the spacecraft. Moreover, in some implementations the orbiting system includes a debris management arrangement, and the method 700 optionally includes executing block 750 so as to secure detached linkages to the debris management arrangement.

It should be noted that, although the above described methods have related to the deployment single spacecraft, one spacecraft at a time, the present disclosure contemplates that, in some implementations, two or more smallsats may be deployed simultaneously. In some implementations the two or more smallsats may be coupled together with mechanical linkages at the time of deployment. In some implementations the two or more smallsats may share a common propulsion system.

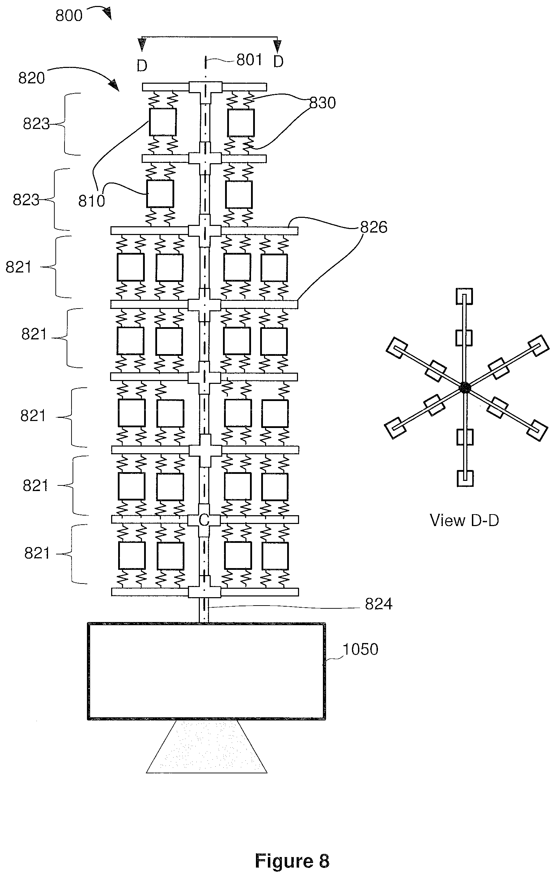

In some implementations, a need for a robotic manipulator may be avoided. For example, a system including a plurality of small spacecraft and a structural arrangement may be configured to detach at least one of the plurality of spacecraft from the structural arrangement, and deploy the spacecraft by rotating or translating the structural arrangement. Referring now to Figure 8, a system 800 includes a plurality of small spacecraft 810 and a structural arrangement 820. The structural arrangement 820 is, advantageously, configured to provide the only load path between the plurality of spacecraft 810 and the launch vehicle upper stage 1050. The structural arrangement 820 is configured as a lightweight tree-like structure that includes at least one trunk member 824 approximately aligned with a longitudinal axis 801 and a plurality of branch members 826. Each branch member 826 has an end portion that is substantially outboard from the longitudinal axis. In the illustrated implementation, each branch member 126 is approximately orthogonal to the trunk member 824, but other arrangements are contemplated wherein the branch member 826 may be disposed at an acute or obtuse angle to the longitudinal axis 801.

The system 800 includes a number of mechanical linkages 830. The structural arrangement 820 may be configured to include interfaces with which the mechanical linkages 830 may be coupled. Each mechanical linkage 830 is a spring-like coupling that provides substantial resistance to both compression and tension. In the illustrated implementation, each mechanical linkage 830 is detachably coupled at a first end with a first respective spacecraft 810 and coupled at a second end with a respective one of the plurality of branch members 826.

Advantageously, the structural arrangement 820 may conform to the cylindrical/conical inner surface of a launch vehicle fairing so as to efficiently utilize the interior volume of the launch vehicle fairing. The mechanical linkages 830 between the spacecraft 810 may be structurally modeled as mechanical springs configured to resist both compressive and tensile forces. A spring constant of the mechanical linkages 830 may be selected such that the system (structural arrangement 820, mechanical linkages 830 and spacecraft 810) exhibits a requisite degree of stiffness. In addition to supporting the small spacecraft 810, the mechanical linkages 830 may also prevent physical contact between individual spacecraft 810 in the face of launch vibration and acoustic loads, thus preventing damage to the spacecraft 810. In some implementations, a mechanical coupling between each branch member 826 and a corresponding surface of a spacecraft 810 includes two or more mechanical linkages 830. In an implementation, each such mechanical coupling includes four mechanical linkages 830.

In the configuration illustrated in Figure 8, 72 small spacecraft 810 are contemplated (12 spacecraft 810 disposed in each of five lower tiers 821, and 6 spacecraft 810 disposed in each of two upper tiers 823). As indicated above, a 3D lattice-like arrangement of spacecraft may be considerably more extensive than illustrated. As a result, a much greater number of very small spacecraft, for example one thousand or more nanosats, may be accommodated by the present disclosure.

Advantageously, mechanical couplings between the supporting structure 820 and the launch vehicle fairing may be avoided, in order to simplify separation of the launch vehicle fairing during or after ascent to orbit. Instead, the spacecraft 810 are mechanically coupled, by way of the branch members 826 and the trunk member 824 to the launch vehicle upper stage. In the illustrated implementation, the trunk member 824 extends vertically along the longitudinal axis 801. The trunk member 824 may be the primary load-path between the lattice arrangement and the launch vehicle upper stage.

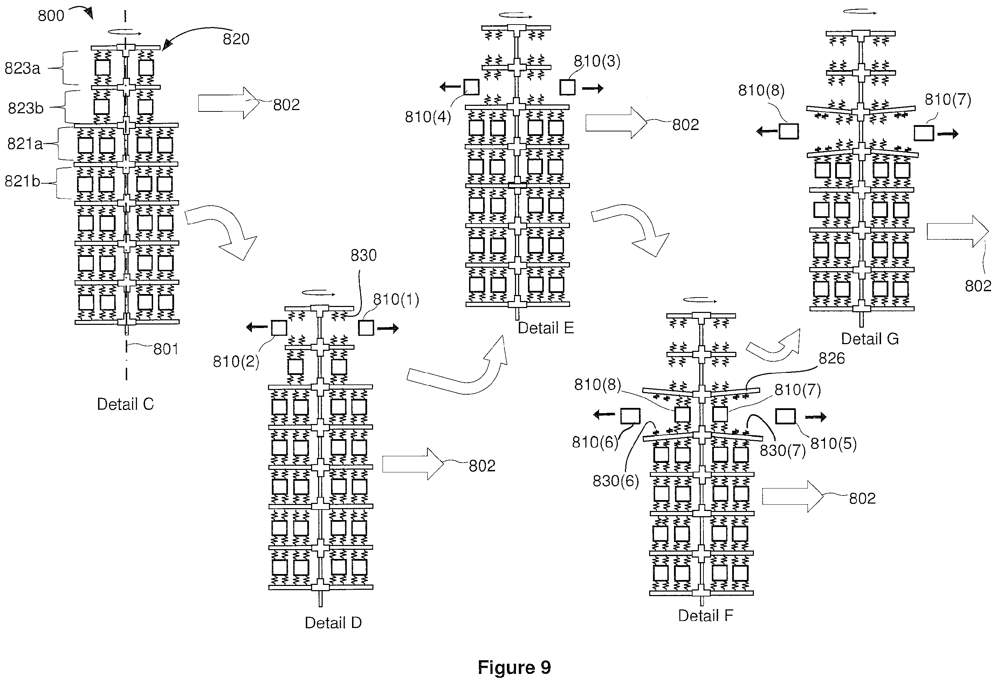

As is illustrated in Figure 9, the spacecraft 810 may be separated (deployed) from the structural arrangement 820, upon achieving orbit, without necessarily relying on a robotic manipulator. In the illustrated example, deployment may be initiated by orienting the structural arrangement 820 such that the longitudinal axis 801 is approximately transverse to a direction of orbital velocity vector 802 and causing the structural arrangement 820 to rotate about the longitudinal axis 801 (Detail C). A centrifugal pseudo force will be experienced by the spacecraft 810, directed radially outward from the longitudinal axis 801. A selected one or more spacecraft 810 may accordingly be separated passively from the structural arrangement 820, by disengaging the mechanical linkages 830 coupling the selected spacecraft 810 with the structural arrangement 820. In the illustrated example, referring now to Detail D, two spacecraft 810, spacecraft 810(1) and 810(2) may be deployed approximately simultaneously, in opposite directions, parallel to the orbital velocity vector 802. As a result, each spacecraft will drift away from each other and from the structural arrangement 820. Advantageously, the disengaged mechanical linkages 830 may be configured to remain with the structural arrangement 820 when the spacecraft are separated, thereby avoiding creation of orbital debris.

Referring now to Detail E, after a desired separation between the deployed spacecraft 810(1) and 810(2) has been achieved (and, optionally, after any other spacecraft on upper tier 823a have been deployed), an additional two spacecraft 810, spacecraft 810(3) and 810(4) may be similarly deployed approximately simultaneously, in opposite directions, parallel to the orbital velocity vector 802. As a result, each spacecraft will drift away from each other and from the structural arrangement 820. As indicated above, the disengaged mechanical linkages 830 may be configured to remain with the structural arrangement 820 when the spacecraft are separated, thereby avoiding creation of orbital debris.

Referring now to Detail F, after a desired separation between the deployed spacecraft 810(3) and 810(4) has been achieved (and, optionally, after any other spacecraft on upper tier 823b have been deployed), an additional two spacecraft 810, spacecraft 810(5) and 810(6) may be similarly deployed approximately simultaneously, in opposite directions, parallel to the orbital velocity vector 802. It may be observed that spacecraft 810(5) and 810(6) are outboard of, respectively spacecraft 810(7) and 810(8). Mechanical linkages 830 associated with such outboard spacecraft (e.g., mechanical linkages 830(6) and 830(7) may be configured to be in tension while coupled with a respective spacecraft and to retract naturally once the respective spacecraft are deployed. As a result, an unobstructed path for deployment of inboard spacecraft 810(7) and 810(8) may be passively achieved. The deployment path for inboard spacecraft 810(7) and 810(8) may be further passively improved by configuring one or more of the branch members 826 as flexures. As may be observed in Detail G, when spacecraft 810(5) and 810(6) are disengaged from mechanical linkages 830(5) and 803(6) of lower tier 821a, loads on associated branch members 826, directly above and below lower tier 821a, are released. As a result, the associated branch members may be configured to flex in opposite directions (i.e., outer ends of upper branch members may flex upward, outer ends of lower branch members may flex downward).

Referring now to Detail G, after a desired separation between the deployed spacecraft 810(5) and 810(6) has been achieved (and, optionally, after any other spacecraft on lower tier 821a have been deployed), an additional two spacecraft 810, spacecraft 810(7) and 810(8), may be similarly deployed approximately simultaneously, in opposite directions, parallel to the orbital velocity vector 802.

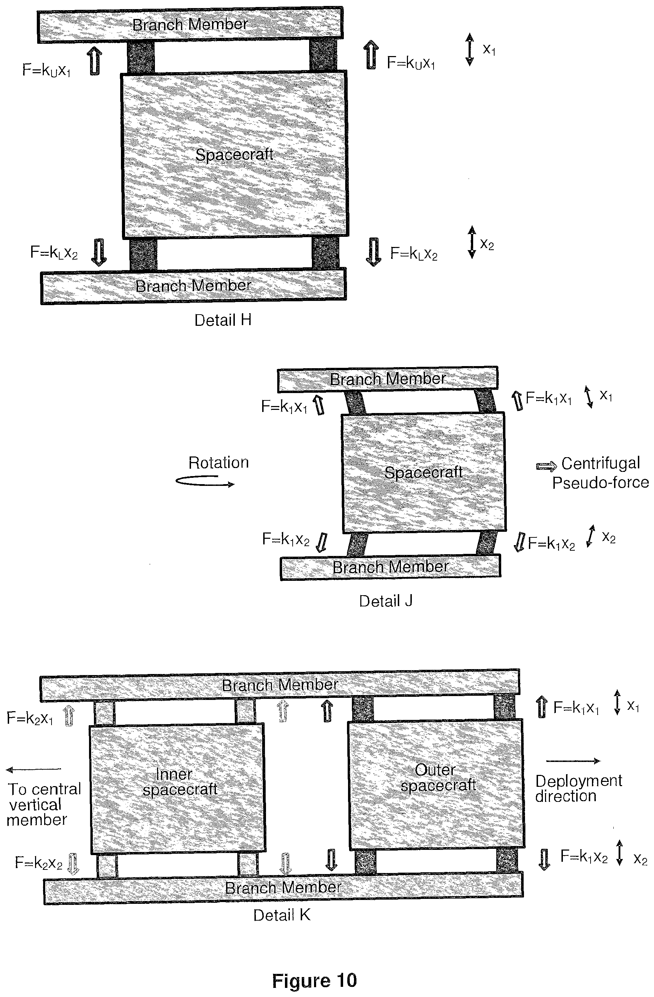

Figure 10 illustrates some design considerations for spring constant selection for mechanical linkages coupling the spacecraft to branch members. On the one hand, if all mechanical linkages used on a single launch are configured to have the same spring constant (k), the mechanical linkages may be interchangeable, which would save procurement, labor and other costs. However, because it is likely that all spacecraft have a similar mass the period of oscillation of all spacecraft would be similar if the same spring constant were applied throughout the configuration. As a result, all spacecraft may undergo synchronized oscillations, which could damage the supporting structure.

Advantageously, mechanical linkage spring constants may be selected so as to avoid rotational motions of a spacecraft around an axis transverse to the longitudinal axis when the launch vehicle is under thrust and is generating vibrations. Thus, referring now to Detail H, for each individual spacecraft, mechanical linkages coupling an upper surface of the spacecraft with a branch member above the spacecraft may be configured to have the same spring constant, k_{U}; similarly, all mechanical linkages coupling a lower surface of the spacecraft with a branch number below the spacecraft on the bottom of a particular spacecraft may be configured to have the same spring constant, k_{L}. Use of a consistent spring constant is also advantageous to keep the spacecraft level when they are at rest with respect to the supporting structure, for example when the launcher is not applying thrust.

As described above, the launch vehicle upper stage may be configured to rotate around its longitudinal axis to facilitate deployment of the spacecraft. When this rotation is established, the spacecraft will be displaced radially outward, away from the longitudinal axis and trunk member of the supporting structure. Advantageously, the displacement should be entirely transverse to the longitudinal axis avoid any significant displacement parallel to the longitudinal axis. Thus, referring now to Detail J, the spring constant k_{U} of the upper mechanical linkages and the spring constant k_{L} of the lower mechanical linkages on each spacecraft may be configured to be the same (k₁). Advantageously, moreover the upper mechanical linkages on the lower mechanical linkages may be configured to have approximately the same length

As a result, lengths x₁ and x₂ would be about the same when the launch vehicle is not under thrust and is under weightless or zero-g conditions because the upper and lower springs will have the same similar length and spring constant to satisfy the conditions above. The lengths would also be about the same when the launcher, in zero-g conditions is rotating to support deployment of the spacecraft. When the launcher is under thrust or is at rest on the surface of Earth prior to launch the lengths would differ, making x₁ longer and x₂ shorter as a result of the upper mechanical linkages experiencing tension in the lower mechanical linkages experiencing compression.

The spring constants of mechanical linkages associated with opposite pairs of spacecraft that are simultaneously separated may also need to be similar to avoid a significant disturbance of the supporting structure when deployment occurs.

The mechanical linkages of spacecraft disposed outboard of other spacecraft in a common tier may be configured retract upon deployment such spacecraft, as described above. However, the mechanical spacecraft proximal to the longitudinal axis need not retract upon deployment of such spacecraft. Therefore, these mechanical linkages may be configured to have significantly different characteristics from the mechanical linkages of the outboard spacecraft. For example, referring to Detail K, a spring constant k₂ for mechanical linkages associated with an inner spacecraft springs may be configured to be lower than a spring constant k₁ of mechanical linkages associated with an outer spacecraft. Moreover, the springs may be configured to have a longer natural length than those on the outer spacecraft.

In some embodiments the spring constant of mechanical linkages associated with all outer spacecraft could have the same constant k₁ and the spring constant of mechanical linkages associated with all inner spacecraft could have the same spring constant k₂. As a result of such configuration not all spacecraft will oscillate with the same period, although groups of spacecraft could oscillate together, simultaneous deployments of opposite pairs of spacecraft would result in minimal disturbance torques.

In some implementations four-point separation concept may be incorporated, in which, for each spacecraft, four mechanical linkages couple an upper surface of the spacecraft with a branch member above the spacecraft and four mechanical linkages couple a lower surface of the spacecraft with a branch number below the spacecraft.

In some implementations, notwithstanding that the mechanical linkages inherently have some natural damping, additional damping may be included to prevent an undesirable increase in the amplitude of the oscillatory motion of the spacecraft. Such damping would tend to increase the time for the springs on the outer spacecraft to retract and provide clearance for deployment of inner spacecraft and a deployment sequence may be configured to provide sufficient time between deployment of outer spacecraft on a given tier and inner spacecraft on that tier for the springs to sufficiently retract.

In some implementations, the period of rotation is expected to exceed ten seconds during this spacecraft deployment. Pairs of spacecraft would be deployed no more than once every half-rotation so that the motion of the separated spacecraft is approximately parallel to the direction of orbital motion. Delaying separation of the next pair by one-half or more rotations may be considered to provide sufficient time for the springs to retract.

In some implementations, the spin rate of the launch vehicle may be reduced as spacecraft are in order to reduce the risk that later-separated spacecraft overtake a previously separated spacecraft.

It should be appreciated that an inner spacecraft will not overtake an outer spacecraft because inner spacecraft spin speed, as measured in meters per second, would always be less than that of the outer spacecraft if the launcher were rotating at a constant rate. This is because the radius of rotation of the inner spacecraft is less than that of the outer spacecraft.

In some implementations the upper spacecraft are the first to be separated and are inner spacecraft. The launcher rotation might be set to a higher rate for these spacecraft to avoid outer spacecraft separated later from catching up with them. An alternative would be to allow extra time between these first few separation events and the deployment of the remainder of the spacecraft.

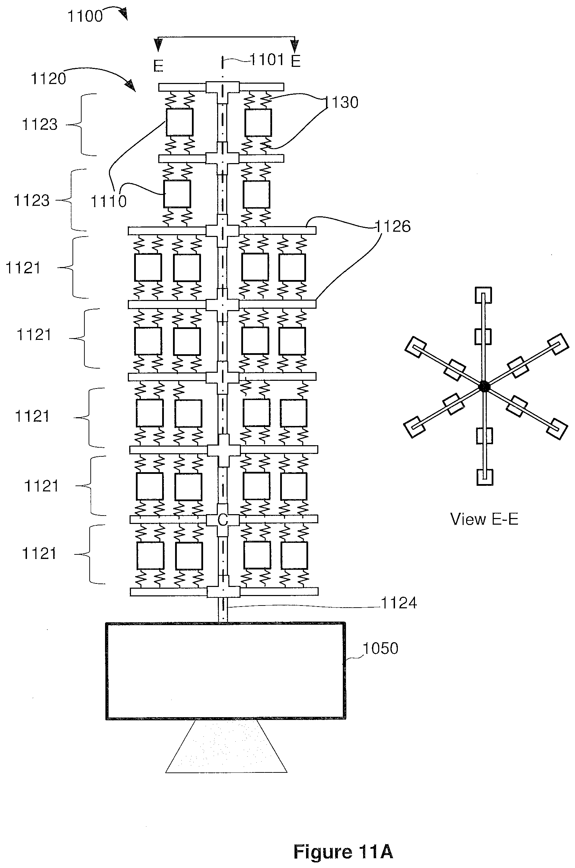

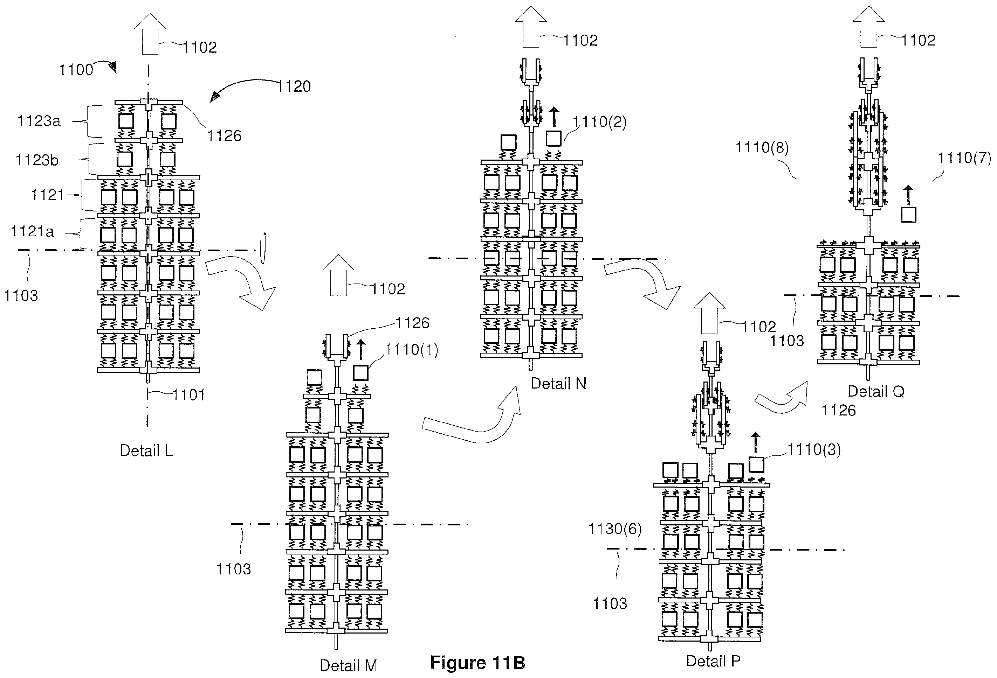

Figures 11A and 11B illustrate an example of a further implementation in which a need for a robotic manipulator may be avoided. Similarly to the example described in connection with Figure 8, a system including a plurality of small spacecraft and a structural arrangement may be configured to detach at least one of the plurality of spacecraft from the structural arrangement, and deploy the spacecraft by rotating the structural arrangement. Here, a system 1100 includes a plurality of small spacecraft 1110 and a structural arrangement 1120. The structural arrangement 1120 is, advantageously, configured to provide the only load path between the plurality of spacecraft 1110 and the launch vehicle upper stage 1050. The structural arrangement 1120 is configured as a lightweight tree-like structure that includes at least one trunk member 1124 approximately aligned with a longitudinal axis 1101 and a plurality of branch members 1126. Each branch member 1126 has an end portion that is substantially outboard from the longitudinal axis.

The system 1100 includes a number of mechanical linkages 1130. The structural arrangement 1120 may be configured to include interfaces with which the mechanical linkages 1130 may be coupled. Each mechanical linkage 1130 is a spring-like coupling that provides substantial resistance to both compression and tension. In the illustrated implementation, each mechanical linkage 1130 is detachably coupled at a first end with a first respective spacecraft 1110 and coupled at a second end with a respective one of the plurality of branch members 1126.

In the configuration illustrated in Figure 11, 72 small spacecraft 1110 are contemplated (12 spacecraft 1110 disposed in each of five lower tiers 1121, and 6 spacecraft 1110 disposed in each of two upper tiers 1123).

As is illustrated in Figure 11B, the spacecraft 1110 may be separated (deployed) from the structural arrangement 1120, upon achieving orbit, without necessarily relying on a robotic manipulator. In the illustrated example, deployment may be initiated by orienting the structural arrangement 1120 such that the longitudinal axis 1101 (Detail L) is approximately aligned with a direction of orbital velocity vector 1102 and causing the structural arrangement 1120 to rotate about an axis 1103 that is approximately transverse to the longitudinal axis. A centrifugal pseudo-force will be experienced by the spacecraft 1110, directed radially outward from the transverse axis 1103. A selected one or more spacecraft 1110 may accordingly be separated passively from the structural arrangement 1120, by disengaging the mechanical linkages 1130 coupling the selected spacecraft 1110 with the structural arrangement 1120. In the illustrated example, referring now to Detail M, a spacecraft 1110(1) is shown being deployed approximately in a direction approximately parallel to the orbital velocity vector 1102. As a result, the spacecraft 1110(1) will drift away from the structural arrangement 1120. To facilitate the deployment, branch member 1126 may be configured articulate away from an intended deployment path of the spacecraft 1110(1). In the illustrated implementation, for example, at least some branch members 1126 may be hingedly coupled with the structural arrangement 1120, such that the branch member may be rotated from a first direction transverse to the longitudinal axis to a second direction approximately parallel to the longitudinal axis. Advantageously, the disengaged mechanical linkages 1130 may be configured to remain with the structural arrangement 1120 when the spacecraft are separated, thereby avoiding creation of orbital debris.

Referring now to Detail N, after a desired separation between the deployed spacecraft 1110(1) has been achieved and any other spacecraft on upper tier 1123a have been deployed, an additional spacecraft 1110(3) may be similarly deployed in a direction approximately parallel to the orbital velocity vector 1102. As a result, the spacecraft 1110(3) will drift away from the structural arrangement 1120.

Referring now to Detail P, after a desired separation between the deployed spacecraft 1110(2) has been achieved, and after any other spacecraft on upper tier 1123b have been deployed, an additional spacecraft 1110, spacecraft 1110(3) may be similarly deployed in a direction approximately parallel to the orbital velocity vector 1102.

Referring now to Detail Q, after a desired separation between the deployed spacecraft 1110(3) has been achieved, and after any other spacecraft on lower tier 1121a have been deployed, an additional spacecraft 1110(4) may be similarly deployed in a direction approximately parallel to the orbital velocity vector 1102.

In the illustrated implementation, successive tiers of spacecraft 1110 are deployed in a sequence such that spacecraft farther from the axis of rotation (axis 1103) are deployed prior to spacecraft that are closer to the axis 1103. It should also be observed that, as spacecraft are deployed, the location of axis 1103 (which passes through the center of mass of the systems 1100) moves toward the launch vehicle upper stage 1050 (omitted from Figure 11B for clarity of illustration).

Instead of or in addition to rotation of the system as described above in connection with Figures 9-11, a need of a robotic manipulator to effect spacecraft deployment may be avoided by translating the system with respect to a spacecraft to be deployed. For example, after disengaging a spacecraft, thrusters disposed on the structural arrangement or the launch vehicle upper stage to which it is attached, may provide a delta-V to the system that causes the system to drift away from the spacecraft to be deployed. It will be appreciated that this may be accomplished with an impulse directed along an axis transverse to or parallel with the longitudinal axis of the structural arrangement. For example, if the structural arrangement, on orbit, is oriented such that its longitudinal axis is transverse to its orbital velocity vector, then impulse directed transversely to the longitudinal axis will accelerate or decelerate the system, and the disengaged spacecraft will separate from the system in a direction generally transverse to the longitudinal axis. As a further example, if the structural arrangement, on orbit, is oriented such that its longitudinal axis is aligned with its orbital velocity vector, then impulse directed parallel to the longitudinal axis will accelerate or decelerate the system, and the disengaged spacecraft will separate from the system in a direction generally parallel to the longitudinal axis.

Thus, techniques for enabling tens to thousands of smallsats to be simultaneously carried into space on a single launch vehicle, and subsequently deployed into orbit, have been disclosed. The foregoing merely illustrates principles of the invention.

## Claims

1. A system comprising:
a payload including a plurality of spacecraft configured for deployment in an orbit;
a launch vehicle upper stage (1050);
a tree-like structural arrangement (120) providing a load path between a launch vehicle upper stage and the plurality of spacecraft; and
at least one thruster disposed on the structural arrangement or on the launch vehicle upper stage, wherein:
the tree-like structural arrangement (120) includes:
at least one trunk member (124) that is approximately aligned with a longitudinal axis of the launch vehicle upper stage;
a plurality of branch members (126), each branch member having at least a first end portion that is substantially outboard from the longitudinal axis and a second end portion attached to the trunk member (124); and
a plurality of mechanical linkages (130), each mechanical linkage (130) having a first respective end and a second respective end;
the first respective end of each mechanical linkage is detachably coupled with a first respective spacecraft;
the second respective end of each of the mechanical linkages (130) is attached to one of a branch member of the plurality of branch members (126), the trunk member (124), and a second respective spacecraft (110);
each of the mechanical linkages (130) includes a spring-like coupling that provides resistance to both compression and tension;
each spacecraft is mechanically coupled with the launch vehicle upper stage only by the tree-like structural arrangement;
each spacecraft is mechanically coupled to the tree-like structural arrangement by way of (a) at least one mechanical linkage coupling an upper surface of the spacecraft with a branch member above the spacecraft (b) at least one mechanical linkage coupling a lower surface of the spacecraft and a branch member below the spacecraft and (c) at least one further mechanical linkage detachably coupled at a first end with the respective spacecraft and detachably coupled at a second end with one of of: one of the plurality of branch members (126), the at least one trunk member (124), or a second respective spacecraft (110); and
during deployment of at least one spacecraft of the plurality of spacecraft from the system, when disposed in the orbit, the system is configured for either:
(A) aligning the longitudinal axis in an orientation with respect to an orbital velocity vector, the orientation being transverse to the orbital velocity vector; detaching the at least one spacecraft from respective mechanical linkages (130) and (i) rotating the structural arrangement about an axis parallel to the longitudinal axis or (ii) translating the structural arrangement by imparting, with the at least one thruster, an impulse directed substantially parallel to the orbital velocity vector; or
(B) aligning the longitudinal axis in an orientation with respect to an orbital velocity vector, the orientation being parallel to the orbital velocity vector; detaching the at least one spacecraft from respective mechanical linkages (130); and (iii) rotating the structural arrangement about an axis transverse to the longitudinal axis or (iv) translating the structural arrangement by imparting, with the at least one thruster, an impulse directed substantially parallel to the orbital velocity vector.

2. The system of claim 1, wherein, when the at least one spacecraft is detached, each respective mechanical linkage is configured to retract toward a respective branch member (126) to which the respective mechanical linkage (130) is attached.

3. A method comprising:
deploying, from an orbiting system including a plurality of spacecraft, a first spacecraft of the plurality of spacecraft; and
deploying, from the orbiting system, a second spacecraft of the plurality of spacecraft; wherein
a tree-like structural arrangement (120) provides a load path between a launch vehicle upper stage and the plurality of spacecraft; and
at least one thruster disposed on the tree-like structural arrangement or on the launch vehicle upper stage, wherein
the tree-like structural arrangement (120) includes at least one trunk member (124) that is approximately aligned with a longitudinal axis of the launch vehicle upper stage, a plurality of branch members, each branch member having at least a first end portion that is substantially outboard from the longitudinal axis and a second end portion attached to the trunk member, and a plurality of mechanical linkages, each mechanical linkage (130) having a first respective end and a second respective end:
each of the mechanical linkages includes a spring-like coupling that provides resistance to both compression and tension;
the first respective end of each mechanical linkage (130) is detachably coupled with a first respective spacecraft;
the second respective end of at least one of the mechanical linkages (130) is attached to one of a branch member of the plurality of branch members (126), the trunk member (124); and a second respective spacecraft (110);
each spacecraft is mechanically coupled with the launch vehicle upper stage only by the tree-like structural arrangement;
each spacecraft is mechanically coupled to the tree-like structural arrangement by way of (a) at least one mechanical linkage coupling an upper surface of the spacecraft with a branch member above the spacecraft, (b) at least one mechanical linkage coupling a lower surface of the spacecraft and a branch member below the spacecraft and (c) at least one further mechanical linkage detachably coupled at a first end with the respective spacecraft and detachably coupled at a second end with one of of: one of the plurality of branch members (126), the at least one trunk member (124),
or a second respective spacecraft (110); and
each deploying includes detaching one of the first spacecraft or the second spacecraft from respective mechanical linkages and one of:
(A) aligning the longitudinal axis in an orientation with respect to an orbital velocity vector, the orientation being transverse to the orbital velocity vector; detaching the spacecraft from respective mechanical linkages; and (i) rotating the structural arrangement about an axis parallel to the longitudinal axis or (ii) translating the structural arrangement by imparting, with the at least one thruster, an impulse directed substantially parallel to the orbital velocity vector; or
(B) aligning the longitudinal axis in an orientation with respect to an orbital velocity vector, the orientation being parallel to the orbital velocity vector; detaching the spacecraft from respective mechanical linkages (130); and (iii) rotating the structural arrangement about an axis transverse to the longitudinal axis or (iv) translating the structural arrangement by imparting, with the at least one thruster, an impulse directed substantially parallel to the orbital velocity vector.

4. The method of claim 3, wherein, when a spacecraft is detached, the respective mechanical linkages (130) are configured to retract toward respective branch members to which they are attached.

## Patentansprüche

1. System, umfassend:
eine Nutzlast, die eine Vielzahl von Raumfahrzeugen umfasst, die zum Stationieren in einer Umlaufbahn konfiguriert sind;
eine Trägerraketenoberstufe (1050);
eine baumartige strukturelle Anordnung (120), die einen Lastpfad zwischen einer Trägerraketenoberstufe und der Vielzahl von Raumfahrzeugen bereitstellt; und
mindestens eine Steuerrakete, die auf der strukturellen Anordnung oder auf der Trägerraketenoberstufe angeordnet ist, wobei
die baumartige strukturelle Anordnung (120) umfasst:
mindestens ein Stammelement (124), das ungefähr auf eine Längsachse der Trägerraketenstufe ausgerichtet ist;
eine Vielzahl von Abzweigelementen (126), wobei jedes Abzweigelement mindestens einen ersten Endteil, der im Verhältnis zur Längsachse nach außen liegt, und einen zweiten Endteil, der an dem Stammelement (124) angebracht ist, aufweist; und
eine Vielzahl von mechanischen Gestängen (130), wobei jedes mechanische Gestänge (130) ein jeweiliges erstes Ende und ein jeweiliges zweites Ende aufweist;
das jeweilige erste Ende jedes mechanischen Gestänges mit einem jeweiligen ersten Raumfahrzeug abnehmbar gekoppelt ist;
das jeweilige zweite Ende jedes der mechanischen Gestänge (130) an einem von einem Abzweigelement der Vielzahl von Abzweigelementen (126), dem Stammelement (124) und einem jeweiligen zweiten Raumfahrzeug (110) angebracht ist;
jedes der mechanischen Gestänge (130) umfasst eine federartige Kopplung, die Widerstand sowohl gegen Druck als auch Zug bereitstellt;
jedes Raumfahrzeug ist mit der Trägerraketenoberstufe nur über die baumartige strukturelle Anordnung mechanisch gekoppelt;
jedes Raumfahrzeug ist mit der baumartigen strukturellen Anordnung mechanisch gekoppelt über (a) mindestens ein mechanisches Gestänge, das eine Oberseite des Raumfahrzeugs mit einem Abzweigelement oberhalb des Raumfahrzeugs koppelt, (b) mindestens ein mechanisches Gestänge, das eine Unterseite des Raumfahrzeugs und ein Element unterhalb des Raumfahrzeugs koppelt, und (c) mindestens ein anderes mechanisches Gestänge, das an einem Ende des jeweiligen Raumfahrzeugs abnehmbar gekoppelt ist und an einem zweiten Ende mit dem anderen der Vielzahl von Abzweigelementen (125) des mindestens einen Stammelements (124) oder eines jeweiligen zweiten Raumfahrzeugs (110) abnehmbar gekoppelt ist; und
während des Stationierens mindestens eines Raumfahrzeugs der Vielzahl von Raumfahrzeugen des Systems, wenn es in die Umlaufbahn gesetzt wird, das System konfiguriert ist zum:
(A) Ausrichten der Längsachse in einer Orientierung im Verhältnis zu einem Bahngeschwindigkeitsvektor, wobei die Orientierung zum Bahngeschwindigkeitsvektor; querliegt, Abnehmen des mindestens einen Raumfahrzeugs von jeweiligen mechanischen Gestängen (130), und (i) Drehen der strukturellen Anordnung um eine Achse parallel zur Längsachse, oder (ii) Verschieben der strukturellen Anordnung, indem ihr durch mindestens eine Steuerrakete eine Impuls verliehen wird, der im Wesentlichen parallel zum Bahngeschwindigkeitsvektor gerichtet; oder
(B) Ausrichten der Längsachse in einer Orientierung im Verhältnis zu einem Bahngeschwindigkeitsvektor, wobei die Orientierung parallel zum Bahngeschwindigkeitsvektor ist; Abnehmen des mindestens einen Raumfahrzeugs von jeweiligen mechanischen Gestängen (130); und (iii) Drehen der strukturellen Anordnung um eine Achse, die zur Längsachse querliegt, oder (iv) Verschieben der strukturellen Anordnung, indem ihr durch die mindestens eine Steuerrakete ein Impuls verliehen wird, der im Wesentlichen parallel zum Bahngeschwindigkeitsvektor gerichtet ist.

2. System nach Anspruch 1, wobei, wenn das mindestens eine Raumfahrzeug abgenommen wird, jedes jeweilige mechanische Gestänge dazu konfiguriert ist, sich in Richtung auf ein jeweiliges Abzweigelement (126), an dem das jeweilige mechanische Gestänge (130) angebracht ist, zurückzuziehen.

3. Verfahren, umfassend:
Stationieren, von einem Orbitalsystem aus, das eine Vielzahl Raumfahrzeugen umfasst, eines ersten Raumfahrzeugs der Vielzahl von Raumfahrzeugen; und
Stationieren, von einem Orbitalsystem aus, eines zweiten Raumfahrzeugs der Vielzahl von Raumfahrzeugen; wobei
eine baumartige strukturelle Anordnung (120) einen Lastpfad zwischen einer Trägerraketenoberstufe und der Vielzahl von Raumfahrzeugen bereitstellt; und
mindestens eine Steuerrakete auf der strukturellen Anordnung oder auf der Trägerraketenoberstufe angeordnet ist, wobei
die baumartige strukturelle Anordnung (120) mindestens ein Stammelement (124), das ungefähr auf eine Längsachse der Trägerraketenstufe ausgerichtet ist, eine Vielzahl von Abzweigelementen (126), wobei jedes Abzweigelement mindestens einen ersten Endteil, der sich im Verhältnis zur Längsachse nach außen befindet, und einen zweiten Endteil, der an dem Stammelement (124) angebracht ist, aufweist, und eine Vielzahl von mechanischen Gestängen (130), wobei jedes mechanische Gestänge (130) ein jeweiliges erstes Ende und ein jeweiliges zweites Ende aufweist, umfasst;
jedes der mechanischen Gestänge eine federartige Kopplung umfasst, die einen Widerstand sowohl gegen Druck als auch Zug bereitstellt;
das jeweilige erste Ende jedes mechanischen Gestänges mit einem jeweiligen ersten Raumfahrzeug abnehmbar gekoppelt ist;
das jeweilige zweite Ende mindestens eines der mechanischen Gestänge (130) an einem von einem Abzweigelement der Vielzahl von Abzweigelementen (126), dem Stammelement (124) und einem jeweiligen zweiten Raumfahrzeug (110) angebracht ist;
jedes Raumfahrzeug mit der Trägerraketenoberstufe nur über die baumartige strukturelle Anordnung mechanisch gekoppelt ist;
jedes Raumfahrzeug mit der baumartigen strukturellen Anordnung mechanisch gekoppelt ist durch (a) mindestens ein mechanisches Gestänge, das eine Oberseite des Raumfahrzeugs mit einem Abzweigelement oberhalb des Raumfahrzeugs koppelt, (b) mindestens ein mechanisches Gestänge, das eine Unterseite des Raumfahrzeugs und ein Element unterhalb des Raumfahrzeugs koppelt, und (c) mindestens ein anderes mechanisches Gestänge, das an einem Ende des jeweiligen Raumfahrzeugs abnehmbar gekoppelt ist und an einem zweiten Ende mit einem von einem der Vielzahl von Abzweigelementen (125), dem mindestens einen Stammelement (124) oder einem jeweiligen zweiten Raumfahrzeug (110) abnehmbar gekoppelt ist; und
jedes Stationieren das Abnehmen von dem ersten Raumfahrzeug oder dem zweiten Raumfahrzeug aus jeweiligen Gestängen und einen der folgenden Schritte umfasst:
(A) Ausrichten der Längsachse in einer Orientierung im Verhältnis zu einem Bahngeschwindigkeitsvektor, wobei die Orientierung zum Bahngeschwindigkeitsvektor; querliegt, Abnehmen des Raumfahrzeugs von jeweiligen mechanischen Gestängen (130), und (i) Drehen der strukturellen Anordnung um eine Achse parallel zur Längsachse, oder (ii) Verschieben der strukturellen Anordnung, indem ihr durch mindestens eine Steuerrakete, ein Impuls verliehen wird, der im Wesentlichen parallel zum Bahngeschwindigkeitsvektor gerichtet ist; oder
(B) Ausrichten der Längsachse in einer Orientierung, im Verhältnis zu einem Bahngeschwindigkeitsvektor, wobei die Orientierung parallel zum Bahngeschwindigkeitsvektor ist; Abnehmen des Raumfahrzeugs von jeweiligen mechanischen Gestängen (130); und (iii) Drehen der strukturellen Anordnung um eine Achse, die zur Längsachse querliegt, oder (iv) Verschieben der strukturellen Anordnung, indem ihr durch die mindestens eine Steuerrakete, ein Impuls verliehen wird, der im Wesentlichen parallel zum Bahngeschwindigkeitsvektor gerichtet ist.

4. Verfahren nach Anspruch 3,
wobei, wenn ein Raumfahrzeug abgenommen wird, die jeweiligen mechanischen Gestänge (130) dazu konfiguriert sind, sich in Richtung auf jeweilige Abzweigelemente, an denen sie angebracht sind, zurückzuziehen.

## Revendications

1. Système, comprenant :
une charge utile comprenant une pluralité de vaisseaux spatiaux configurés pour un déploiement en orbite;
un étage supérieur de lanceur (1050) ;
un agencement structurel arborescent (120) fournissant un chemin de charge entre un étage supérieur de lanceur et la pluralité de vaisseaux spatiaux ; et
au moins un propulseur disposé sur l'agencement structurel ou sur l'étage supérieur de lanceur, dans lequel :
l'agencement structurel arborescent (120) comprend :
au moins un élément de jonction (124) qui est approximativement aligné sur un axe longitudinal de l'étage supérieur de lanceur ;
une pluralité d'éléments de branche (126), chaque élément de branche ayant au moins une première partie d'extrémité qui se trouve substantiellement vers l'extérieur par rapport à l'axe longitudinal et une deuxième partie d'extrémité rattachée à l'élément de jonction (124) ; et
une pluralité de tringleries mécaniques (130), chaque tringlerie mécanique (130) présentant une première extrémité respective et une deuxième extrémité respective ;
la première extrémité respective de chaque tringlerie mécanique est couplée de manière amovible à un premier vaisseau spatial respectif ;
la deuxième extrémité respective de chacune des tringleries mécaniques (130) est rattachée à l'un d'un élément de branche de la pluralité d'éléments de branche (126), de l'élément de jonction (124), et d'un deuxième vaisseau spatial respectif (110) ;
chacune des tringleries mécaniques (130) comprend un couplage de type ressort qui fournit une résistance à la fois à la compression et à la tension ;
chaque vaisseau spatial n'est couplé mécaniquement à l'étage supérieur de lanceur que par l'agencement structurel arborescent ;
chaque vaisseau spatial est couplé mécaniquement à l'agencement structurel arborescent au moyen (a) d'au moins une tringlerie mécanique couplant une surface supérieure du vaisseau spatial à un élément de branche au-dessus du vaisseau spatial, (b) d'au moins une tringlerie mécanique couplant une surface inférieure du vaisseau spatial et un élément au-dessous du vaisseau spatial, et (c) d'au moins une autre tringlerie mécanique couplée de manière amovible au niveau d'une extrémité au vaisseau spatial respectif et couplée de manière amovible au niveau d'une deuxième extrémité à l'un de la pluralité d'éléments de branche (125), dudit au moins un élément de jonction (124) ou d'un deuxième vaisseau spatial respectif (110) ; et
pendant le déploiement d'au moins un vaisseau spatial de la pluralité de vaisseaux spatiaux du système, lorsqu'il est mis en orbite, le système est configuré pour :
(A) aligner l'axe longitudinal dans une orientation par rapport à un vecteur de vitesse orbitale, l'orientation étant transversale au vecteur de vitesse orbitale ; détacher ledit au moins un vaisseau spatial des tringleries mécaniques (130) respectives, et (i) faire tourner l'agencement structurel autour d'un axe parallèle à l'axe longitudinal, ou (ii) translater l'agencement structurel en lui conférant, par ledit au moins un propulseur, une impulsion dirigée substantiellement en parallèle au vecteur de vitesse orbitale ; ou
(B) aligner l'axe longitudinal dans une orientation par rapport à un vecteur de vitesse orbitale, l'orientation étant parallèle au vecteur de vitesse orbitale ; détacher ledit au moins un vaisseau spatial des tringleries mécaniques (130) respectives ; et (iii) faire tourner l'agencement structurel autour d'un axis transversal à l'axe longitudinal ou (iv) translater l'agencement structurel en lui conférant, par ledit au moins un propulseur, une impulsion dirigée substantiellement en parallèle au vecteur de vitesse orbitale.

2. Système selon la revendication 1, dans lequel, lorsque ledit au moins un vaisseau spatial est détache, chaque tringlerie mécanique respective est configurée pour se rétracter en direction d'un élément de branche (126) respectif auquel est rattachée la tringlerie mécanique (130) respective.

3. Procédé comprenant les étapes consistant à :
déployer, à partir d'un système orbital comprenant une pluralité de vaisseaux spatiaux, un premier vaisseau spatial de la pluralité de vaisseaux spatiaux ; et
déployer, à partir du système orbital respectif, un deuxième vaisseau spatial de la pluralité de vaisseaux spatiaux ; dans lequel
un agencement structurel arborescent (120) fournit un chemin de charge entre un étage supérieur de lanceur et la pluralité de vaisseaux spatiaux ; et
au moins un propulseur disposé sur l'agencement structurel arborescent ou sur l'étage supérieur de lanceur, dans lequel
l'agencement structurel arborescent (120) comprend au moins un élément de jonction (124) qui est approximativement aligné sur un axe longitudinal de l'étage supérieur de lanceur, une pluralité d'éléments de branche, chaque élément de branche ayant au moins une première partie d'extrémité qui se trouve substantiellement vers l'extérieur par rapport à l'axe longitudinal et une deuxième partie d'extrémité rattachée à l'élément de jonction, et une pluralité de tringleries mécaniques, chaque tringlerie mécanique (130) ayant une première extrémité respective et une deuxième extrémité respective :
chacune des tringleries mécaniques comprend un couplage de type ressort qui fournit une résistance à la fois à la compression et à la tension ;
la première extrémité respective de chaque tringlerie mécanique (130) est couplée de manière amovible à un premier vaisseau spatial respectif ;
la deuxième extrémité respective d'au moins l'une des tringleries mécaniques (130) est rattachée à l'un d'un élément de branche de la pluralité d'éléments de branche (126), de l'élément de jonction (124) ; et d'un deuxième vaisseau spatial respectif (110) ;
chaque vaisseau spatial n'est mécaniquement couplé à l'étage supérieur de lanceur que par l'agencement structurel arborescent ;
chaque vaisseau spatial est couplé mécaniquement à l'agencement structurel arborescent au moyen (a) d'au moins une tringlerie mécanique couplant une surface supérieure du vaisseau spatial à un élément de branche au-dessus du vaisseau spatial (b) d'au moins une tringlerie mécanique couplant une surface inférieure du vaisseau spatial et un élément au-dessous du vaisseau spatial, et (c) d'au moins une autre tringlerie mécanique couplée de manière amovible au niveau d'une extrémité au vaisseau spatial respectif et couplée de manière amovible au niveau d'une deuxième extrémité à l'un, d'un de la pluralité d'éléments de branche (125), dudit au moins un élément de jonction (124) ou d'un deuxième vaisseau spatial respectif (110) ; et
chaque déploiement comprend le détachement d'un du premier vaisseau spatial ou du deuxième vaisseau spatial des tringleries mécaniques respectives et une étape parmi :
(A) aligner l'axe longitudinal dans une orientation par rapport à un vecteur de vitesse orbitale, l'orientation étant transversale au vecteur de vitesse orbitale ; détecter le vaisseau spatial des tringleries mécaniques (130) respectives, et (i) faire tourner l'agencement structurel autour d'un axe parallèle à l'axe longitudinal, ou (ii) translater l'agencement structurel en lui conférant, par ledit au moins un propulseur, une impulsion dirigée substantiellement en parallèle au vecteur de vitesse orbitale ; ou
(B) aligner l'axe longitudinal dans une orientation par rapport à un vecteur de vitesse orbitale, l'orientation étant parallèle au vecteur de vitesse orbitale ; détacher le vaisseau spatial des tringleries mécaniques (130) respectives ; et (iii) faire tourner l'agencement structurel autour d'un axis transversal à l'axe longitudinal ou (iv) translater l'agencement structurel en lui conférant, par ledit au moins un propulseur, une impulsion dirigée substantiellement en parallèle au vecteur de vitesse orbitale.

4. Procédé selon la revendication 3,
dans lequel, lorsqu'un vaisseau spatial est détaché, les tringleries mécaniques (130) respectives sont configurées pour se rétracter en direction des éléments de branche respectifs auxquels elles sont rattachées.
